(19) Europäisches Patentamt
European Patent Office
Office européen des brevets

(11) **EP 4 700 435 A1**

(12) **EUROPEAN PATENT APPLICATION**

(43) Date of publication:
**25.02.2026 Bulletin 2026/09**

(21) Application number: **25181742.5**

(22) Date of filing: **10.06.2025**

(51) International Patent Classification (IPC):
***G01S 13/90*** *(2006.01)*

(52) Cooperative Patent Classification (CPC):
**G01S 13/9017**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.08.2024 US 202418808882**

(71) Applicant: **Raytheon Company
Tewksbury, MA 01876 (US)**

(72) Inventors:
• **WILKINSON, Steven R.
Santa Clara, 84765 (US)**
• **SAMANIEGO, Raymond
Prosper, 75078 (US)**
• **WALLACE, Aaron C.
Fairview, 75069 (US)**

(74) Representative: **Crowell & Moring U.K. LLP
199 Bishopsgate
London EC2M 3TY (GB)**

(54) **MULTI-POINT BACKPROJECTION SYNTHETIC APERTURE RADAR**

(57) Systems, devices, methods, and computer-readable media improved synthetic aperture radar (SAR) images. A method includes identifying, based on sourced elevation data, N lock down points on a synthetic aperture radar (SAR) image, where N is an integer greater than one, determining, based on radar pulse data and the N lock down points, a slant range for each of the N lock down points resulting in N slant ranges, interpolating, based on the N slant ranges, slant ranges for pixels on an imaging grid of the SAR image resulting in interpolated slant ranges, and back-projecting, based on the interpolated slant ranges and the N slant ranges, the radar pulse data resulting in the SAR image.

EP 4 700 435 A1

**Description**

This invention was made with government support under government contract NSF AST-1519126 PO: 374179 awarded by a Federal agency. The government has certain rights in the invention.

TECHNICAL FIELD

Embodiments regard back-projecting synthetic aperture radar (SAR) phase history data to a non-planar surface in generating a SAR image.

BACKGROUND

A synthetic aperture radar (SAR) image is generated by projecting radar phase history to an image focus plane. The image focus plane is typically defined to be tangential to a point in the center of the image. This technique may cause distortion and defocusing of the SAR image if the imaged scene is highly non-planar. This technique can also cause geo-registration errors.

BRIEF DESCRIPTION OF DRAWINGS

FIG. 1 illustrates, by way of example, a diagram of an embodiment of a system that can generate a synthetic aperture radar (SAR) image.
FIG. 2 illustrates, by way of example, a diagram of an embodiment of a relevant portion of prior technique for generating a SAR image using back-projection.
FIG. 3 illustrates, by way of example, a flow diagram of an embodiment of a method for improved SAR image generation.
FIG. 4 illustrates, by way of example, a flow diagram of a surface being imaged and a corresponding non-planar surface that is generated using the method of FIG. 3.
FIG. 5 illustrates, by way of example, the selection of ground truth elevation data in a target region.
FIG. 6 illustrates, by way of example, an image generated using a prior SAR back-projection technique.
FIG. 7 illustrates, by way of example, an image generated using the technique of FIG. 3.
FIG. 8 illustrates, by way of example, a diagram of an embodiment of a method for improved SAR image generation.
FIG. 9 illustrates, by way of example, a block diagram of an embodiment of a machine in the example form of a computer system within which instructions for causing the machine to perform any one or more of the methods or techniques discussed herein may be executed.

DETAILED DESCRIPTION

The following description and the drawings sufficiently illustrate teachings to enable those skilled in the art to practice them. Other embodiments may incorporate structural, logical, electrical, process, and other changes. Portions and features of some examples may be included in, or substituted for, those of other examples. Teachings set forth in the claims encompass all available equivalents of those claims.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

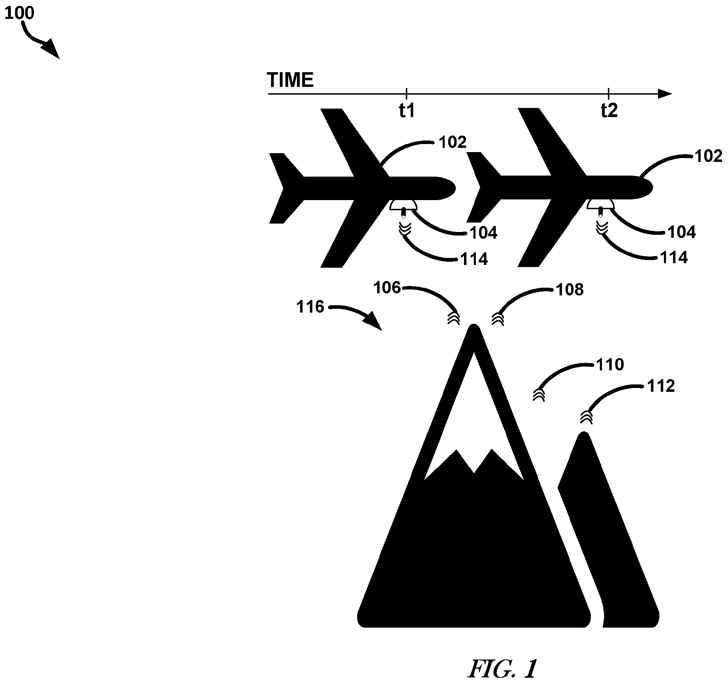

FIG. 1 illustrates, by way of example, a diagram of an embodiment of a system 100 that can generate a synthetic aperture radar (SAR) 104 image. The system 100 as illustrated includes an airborne vehicle 102 that includes a radar 104. The radar 104 emits radio waves (pulses 114). The radar 104 receives echoes 106, 108, 110, 112 that are the pulses 114 bouncing off targets 116 back to the radar 104. Using the echoes 106, 108, 110, 112, the distance (range), direction (azimuth and elevation), and velocity of the targets 116 relative to the radar 104 can be determined.

SAR is a form of radar operation that is used to create two-dimensional images or three-dimensional reconstructions of objects, such as landscapes. SAR uses the motion of a radar antenna over the targets 116 to provide finer spatial resolution than conventional stationary beam-scanning radars. For SAR, the radar 104 is typically mounted on a moving platform, such as the aircraft 102 or a spacecraft. The distance the radar 104 travels over a target during the period when the target scene is "illuminated" creates the large synthetic antenna aperture (the "size" of the antenna). Typically, the larger the aperture, the finer the image resolution will be, this allows SAR to create fine-resolution images ("we can see smaller objects") with comparatively small physical antennas. For a fixed antenna size and orientation, objects which are further away remain illuminated longer - therefore SAR has the property of creating larger synthetic apertures for more distant objects, which results in a consistent spatial resolution over a range of viewing distances.

To create a SAR image, successive pulses 114 of radio waves are transmitted to "illuminate" the target 116, and the echo 106, 108, 110, 112 of each pulse 114 is received and recorded. The pulses are transmitted and the echoes received using a single beam-forming antenna, with wavelengths of a meter down to several millimeters. As the radar 104 onboard the aircraft 102 or spacecraft moves, the antenna location relative to the target changes with time. Signal processing of the successive recorded radar echoes 106, 108, 110, 112 allows the combining of the recordings from these multiple antenna positions. This process forms the synthetic antenna aperture and allows the creation of finer resolution images than would otherwise be possible with a given physical antenna.

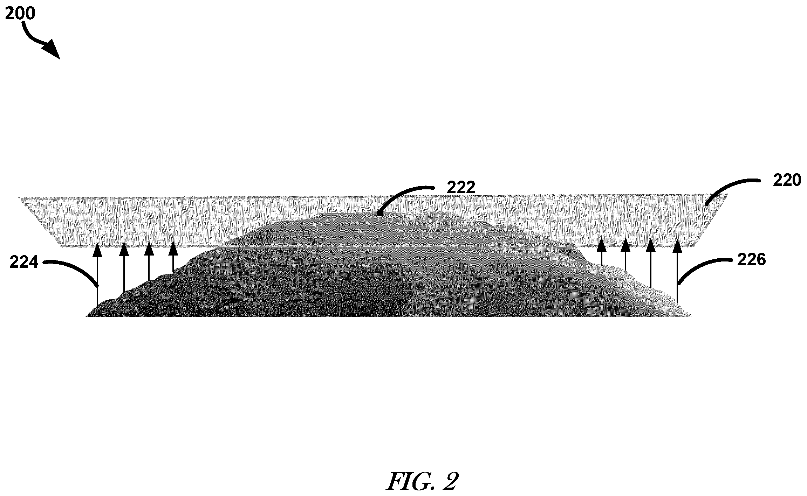

FIG. 2 illustrates, by way of example, a diagram of an embodiment of a relevant portion of prior technique 200 for generating a SAR image using back-projection. The prior technique 200 forms images from input range-compressed SAR data, and may be thought of as the ideal matched filter. Because image formation occurs in this domain no assumptions of flight motion are required. Thus, the data input to the image formation algorithm need not be regularly sampled nor motion compensated at time of collection. The flight motion of the aircraft 102 needs to be known. A brief mathematical description of the prior technique 200 is provided. The complete back-projection derivation appears in M. I. Duersch and D. G. Long, "Analysis of MIMO pixel correlation in SAR," in review (IEEE Trans. Geosci. Remote Sens.).

Consider a general, range-compressed SAR signal. Range-compression means matched filtering the received pulses with their transmit waveform. It is assumed that distances between the transmission pulse and corresponding surface that generates the echo are large enough that the plane-wave approximation may be used. In order to simplify analysis, a stop-and-go transmit/receive approximation is also used. Given the above assumptions, a general expression for the range-compressed signal from a stationary isotropic point scatterer may be given by

$$s_p(l) = \sigma \alpha_p R(l - d_p) e^{-jk d_p} \text{ Equation 1}$$

where $p$ is the pulse number (discrete time), $l$ is fast-time (in distance) relative to the beginning of the pulse (continuous time), $\sigma$ is the backscatter radar cross-section of the point scatterer, $\alpha_p$ includes all gain terms, $k$ is the wavenumber of the

$$k = \frac{2\pi}{\lambda}$$

carrier signal ( , $\lambda$ is the wavelength), $R(l)$ is the range compressed radar response including range windowing, and $d_p$ is the two-way distance traveled by the radar signal. Note that $l = ct$ where $c$ is the propagation speed and $t$ is fast-time. The mapping from time to distance is for convenience. Thus, the signal from the scatter is a function of pulse index (i.e., slow-time) and propagation distance (i.e., fast-time). The scatterer reflections are present in a series of pulses as the platform travels. In forming an image, it is desirable to focus this energy as narrowly as possible. This process is termed slow-time compression or azimuth compression. In order to focus a target's energy in azimuth, its contribution from each of the sequential pulses is combined. The process of matched filtering, or cross-correlating a signal with its template, achieves this in a coherent fashion. Matched filtering also has the advantage of maximizing signal to noise ratio (SNR). The azimuth matched filter for $s_p(l)$ above is

$$h_p = e^{-jk \tilde{d}_p} \text{ Equation 2}$$

where $\tilde{d}_p$ is the distance at each pulse parameterizing the matched filter.

The process of slow-time (azimuth) matched filtering is performed by cross-correlating $h_p(t)$ with the original signal $s_p(t)$ and results in the matched filtered signal

$$f_q(l) = \sum_{p \in P} h_p^*(l) \, s_{p+q}(l) = \sigma \sum_{p \in P} \sigma_p R\left(l - d_p\right) e^{-jk(d_p - \tilde{d}_p)}$$

Equation 3

where P is the set of all pulses contributing to the target. An intermediate step of projecting pulses (indicated by lines 224, 226) to a plane 220 tangent to a point 222 that is central to the image is performed. Some additional intermediate steps are skipped for the sake of brevity, and the result at the point of zero shift ($q = 0$, $l = 0$) when the matched filter distance equals the actual distance to the target is provided:

$$a_0 = f_0(0) = \sigma R(0) \sum_{p \in P} \sigma_p \quad \text{Equation 4}$$

where $a_0$ is the backprojected pixel value.

This is the ideal range and azimuth compressed pixel value for a single point target inside a scattering cell whose position is precisely known. Note that the term "pixel" refers to the imaged signal and "scattering cell" refers to the physical location being imaged.

The pixel value $a_0$ resulting from Equation 4 assumes that the phase of the matched filter perfectly matches the geometric phase of the signal at each pulse. For this assumption to hold, the target must be located at precisely the anticipated position (i.e., the center of the scattering cell) and the antenna phase center must also be known. Consider the common case where the scatter location is displaced from the anticipated position or the antenna phase center is displaced from the measured position. Let $\delta_p = \tilde{d}_p - d_p$ be the difference in the matched filter distance $\tilde{d}_p$ and the actual distance traveled $d_p$. Again skipping several steps and assuming $\delta_p$ is sufficiently small, this results in

$$\tilde{a}_0 \approx \sigma \sum_{p \in P} e^{jk\delta_p} \alpha_p R(\delta_p) \quad \text{Equation 5}$$

Note that in this case, as $|R(\delta)| \leq (R(0))|$ with $\delta \neq 0$, and as the residual phase $e^{jk\delta_p}$ exists at each element in the sum. A goal of autofocus is to alter $\tilde{a}_0$ to estimate actual $a_0$.

This derivation makes it clear that this back-projection does not consider errors in topographic variation. This is because the projection is to a plane tangent to the point in the center of the image. Embodiments help reduce the errors due to topographic variation.

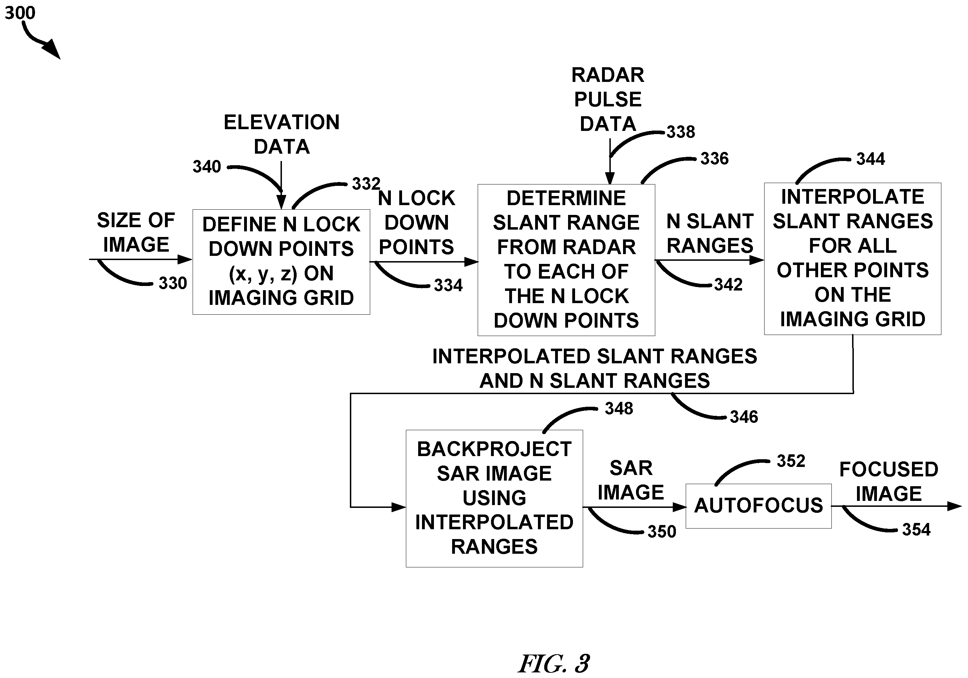

FIG. 3 illustrates, by way of example, a flow diagram of an embodiment of a method 300 for improved SAR image 350 generation. The method 300 as illustrated includes defining N lock down points (x, y, z) on the imaging grid, at operation 332. N is a positive integer greater than one (1). The imaging grid is formed of a rectangular grid of pixels that includes C columns and R rows of pixels where C and R are integers. The size of the image 330 in this example is (C, R). The lock down points can include a pixel that is most central to the image. Such a pixel is located at pixel (C/2, R/2) in the imaging grid. The lock down points can include each of the corner pixels of the imaging grid. The corner pixels are located at (0, 0), (C, R), (C, 0), (0, R). The lock down points can include each halfway pixel that is halfway between the corner pixels. The halfway pixels are located at (C/2, 0), (C, R/2), (C/2, R), (0, R/2). Other lock down points can be selected. The N lock down points 334 are provided to operation 336.

At operation 336, slant ranges from the radar 104 to each of the N lock down points 334 is determined. The slant ranges are the distance between the radar 104 and the lock down points 334. The slant ranges can be determined based on radar pulse data 338 and elevation data 340 derived from an appropriate source. The radar pulse data 338 indicates a location of the radar 104. The elevation data 340 indicates the location of the lock down points 334. Respective differences between the location of the radar 104 and corresponding locations of the lock down points 334 provides N slant ranges 342. The N slant ranges 342 are provided to operation 344.

At operation 344 a non-planar surface is generated by interpolating slant ranges for all other points on the imaging grid. The non-planar surface is defined by interpolated slant ranges and N slant ranges 346. All other points is all points but the N lock down points 334. The N slant ranges 342 provide the base from which the remaining slant ranges can be interpolated. Interpolation can include bicubic interpolation, linear interpolation, among other types of interpolation.

At operation 348, the radar pulse data 338 can be backprojected based on the non-planar surface generated at operation 344. The non-planar surface is a more accurate representation of the surface being imaged than the plane 220. Projecting the radar pulse data 338 to the non-planar surface in back-projection reduces phase errors realized when projecting to the plane 220. Projecting the radar pulse data 338 to the non-planar surface in back-projection reduces image distortion, defocusing, and geo-registration errors realized when projecting to the plane 220, and eliminates the need for techniques such as sub-patching the image which results in phase discontinuities at the sub-patch edges. A result of the operation is a SAR image 350. As discussed previously, when projecting to a plane in back-projection, there are errors in distance determinations. The same is true for back-projection to the non-planar surface, but the errors are reduced using the non-planar surface.

At operation 352, autofocus can be performed to help reduce the residual phase errors from various sources and produce a focused image 354. The operation 352 can include a model based autofocus or an estimation based autofocus. Some common autofocus techniques include map-drift autofocus, phase-gradient autofocus, and prominent point processing.

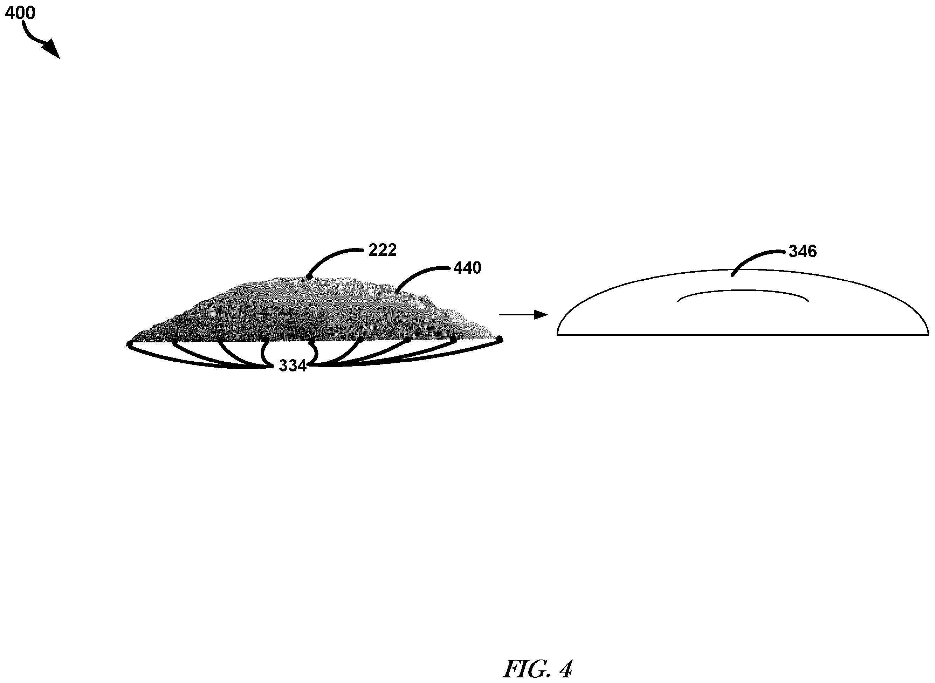

FIG. 4 illustrates, by way of example, a diagram 400 of a surface 440 being imaged and a corresponding non-planar surface 346 that is generated using the method 300. Coordinates (x, y, z) of the point 222 on the surface 440 and N lock down points 334 are determined. Then interpolation, at operation 344, is performed to generate interpolated slant ranges. In the example illustrated, the interpolated slant ranges, when viewed, form a non-planar surface 346. The 3D non-planar surface 346 is then used as the surface to which the radar pulse data is projected in performing back-projection to generate the image 350.

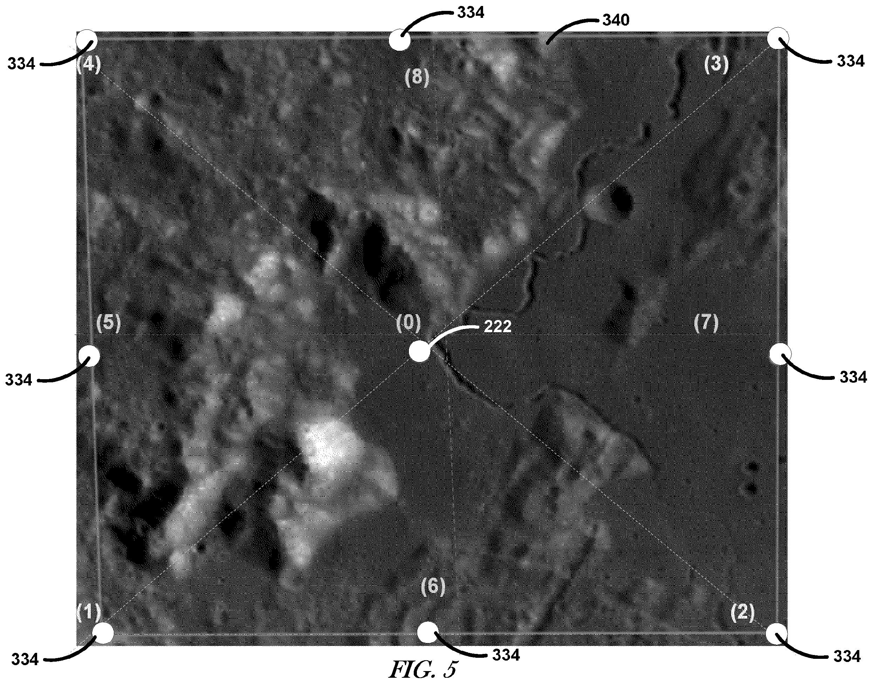

FIG. 5 illustrates, by way of example, the selection of elevation data 340 in a target region. The lock down points 334 and the central point 222 are labelled. These points, jointly, are used as the N lock down points 334.

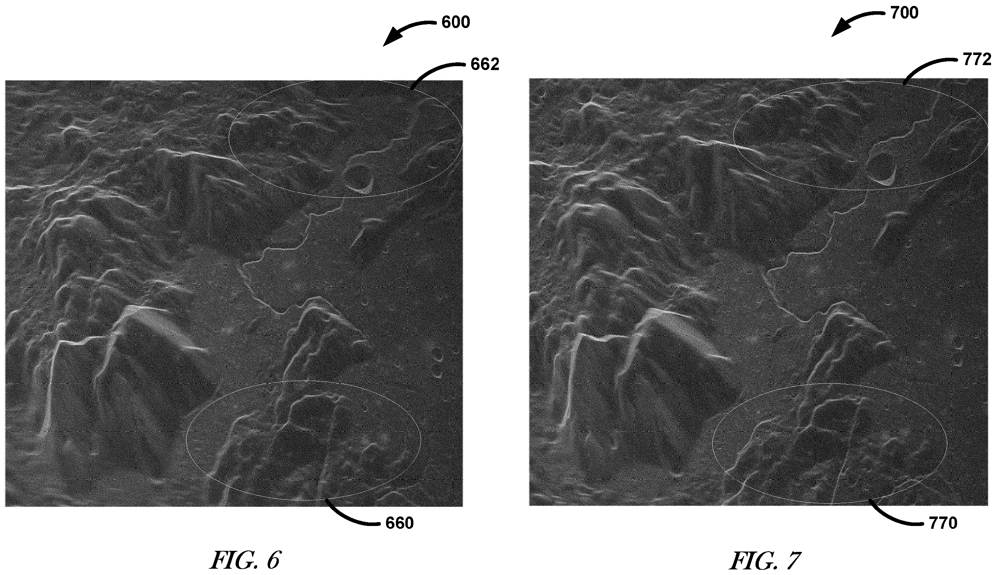

FIG. 6 illustrates, by way of example, an image 600 generated using a prior SAR back-projection technique. FIG. 7 illustrates, by way of example, an image 700 generated using the technique 300. The regions 660, 662 in the image 600 have degraded image quality as compared with the corresponding regions 770, 772 in the image 700. Image quality in this example means geometric distortion, image focus, or the like.

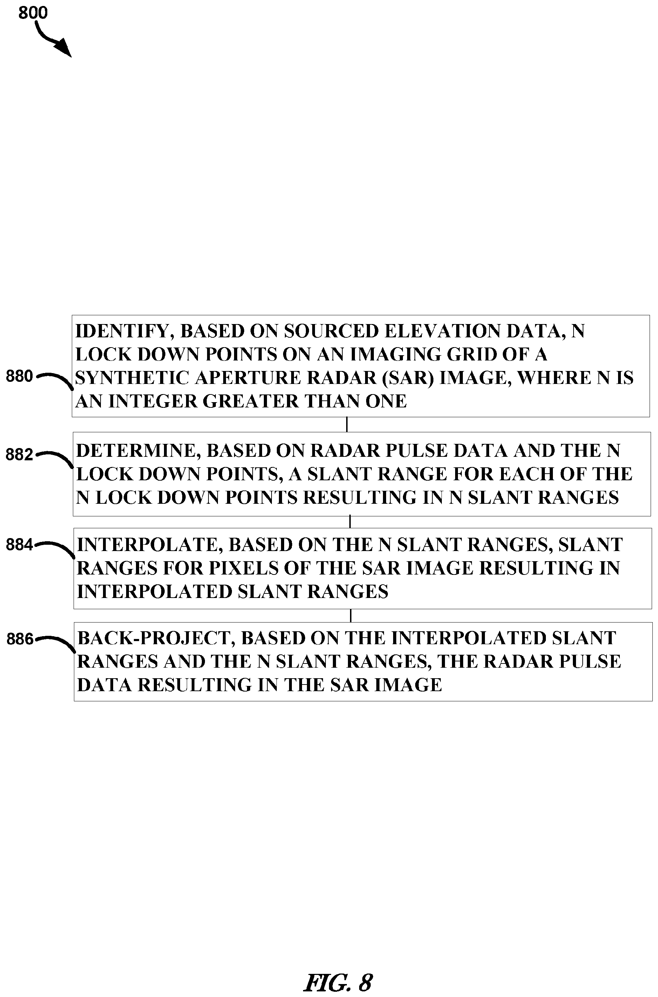

FIG. 8 illustrates, by way of example, a diagram of an embodiment of a method 800 for improved SAR image generation. The method 800 as illustrated includes identifying, based on sourced elevation data, N lock down points on an imaging grid of a synthetic aperture radar (SAR) image, where N is an integer greater than one, at operation 880; determining, based on radar pulse data and the N lock down points, a slant range for each of the N lock down points resulting in N slant ranges, at operation 882; interpolating, based on the N slant ranges, slant ranges for pixels of the SAR image resulting in interpolated slant ranges, at operation 884; and back-projecting, based on the interpolated slant ranges and the N slant ranges, the radar pulse data resulting in the SAR image, at operation 886.

The method 800 can further include receiving data indicating a size of the SAR image. The size can indicate a number of rows and a number of columns of pixels in the SAR image. Each of the N lock down points can be represented by a three-dimensional (3D) point indicating location and elevation of a surface in a field of view of the SAR image. The N lock down points include four corner pixels and a centermost pixel of the SAR image. The method 800 can further include autofocusing the SAR image resulting in a focused SAR image. The elevation data can be retrieved from an elevation source data of a geographic region depicted in the SAR image.

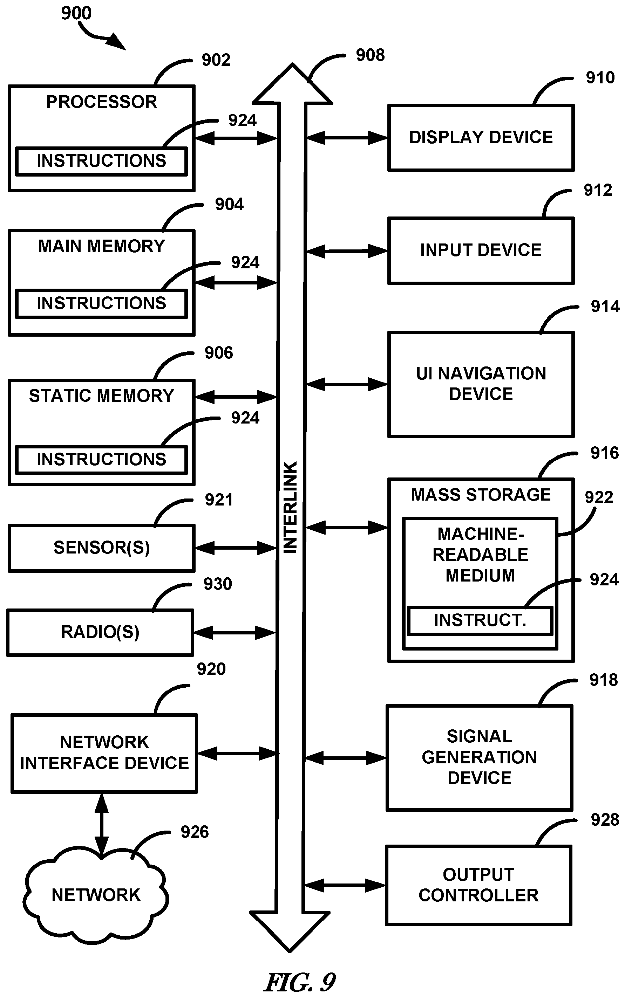

FIG. 9 illustrates, by way of example, a block diagram of an embodiment of a machine in the example form of a computer system 900 within which instructions for causing the machine to perform any one or more of the methods or techniques discussed herein may be executed. One or more of the aircraft 102, radar 104, operations 332, 336, 344, 348, 352, or other component, operation, or technique, can include, or be implemented or performed by one or more of the components of the computer system 900. In a networked deployment, the machine may operate in the capacity of a server or a client machine in server-client network environment, or as a peer machine in a peer-to-peer (or distributed) network environment. The machine may be a personal computer (PC), server, a tablet PC, a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 900 includes a processor 902 (e.g., a central processing unit (CPU), a graphics processing unit (GPU) or both), a main memory 904 and a static memory 906, which communicate with each other via a bus 908. The computer system 900 may further include a video display unit 910 (e.g., a liquid crystal display (LCD) or a cathode ray tube (CRT)). The computer system 900 also includes an alphanumeric input device 912 (e.g., a keyboard), a user interface (UI) navigation device 914 (e.g., a mouse), a mass storage unit 916, a signal generation device 918 (e.g., a speaker), a network interface device 920, and a radio 930 such as Bluetooth, WWAN, WLAN, and NFC, permitting the application of security controls on such protocols.

The mass storage unit 916 includes a machine-readable medium 922 on which is stored one or more sets of instructions and data structures (e.g., software) 924 embodying or utilized by any one or more of the methodologies or functions described herein. The instructions 924 may also reside, completely or at least partially, within the main memory 904 and/or within the processor 902 during execution thereof by the computer system 900, the main memory 904 and the processor 902 also constituting machine-readable media.

While the machine-readable medium 922 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding, or carrying instructions for execution by the machine and that cause the machine to perform any one or more of the methodologies of the present invention, or that is capable of storing, encoding, or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

The instructions 924 may further be transmitted or received over a communications network 926 using a transmission medium. The instructions 924 may be transmitted using the network interface device 920 and any one of a number of well-known transfer protocols (e.g., HTTPS). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of encoding, or carrying instructions for execution by the machine, and includes digital or analog communications signals or other intangible media to facilitate communication of such software.

Additional Examples

Example 1 includes a method comprising identifying, based on sourced elevation data, N lock down points on an imaging grid of a synthetic aperture radar (SAR) image, where N is an integer greater than one, determining, based on radar pulse data and the N lock down points, a slant range for each of the N lock down points resulting in N slant ranges, interpolating, based on the N slant ranges, slant ranges for pixels of the SAR image resulting in interpolated slant ranges, and back-projecting, based on the interpolated slant ranges and the N slant ranges, the radar pulse data resulting in the SAR image.

In Example 2, Example 1 further includes receiving data indicating a size of the SAR image.

In Example 3, Example 2 further includes, wherein the size indicating a number of rows and a number of columns of pixels in the SAR image.

In Example 4, at least one of Examples 1-3 further includes, wherein each of the N lock down points are represented by a three-dimensional (3D) point indicating location and elevation of a surface in a field of view of the SAR image.

In Example 5, Example 4 further includes, wherein the N lock down points include four corner pixels and a centermost pixel of the SAR image.

In Example 6, at least one of Examples 1-5 further includes autofocusing the SAR image resulting in a focused SAR image.

In Example 7, at least one of Examples 1-6 further includes, wherein the elevation data is retrieved from elevation source data of a geographic region depicted in the SAR image.

In Example 8, a non-transitory machine-readable medium includes instructions that, when executed by a machine, cause the machine to perform operations for improving synthetic aperture radar (SAR) imagery, the operations comprising identifying, based on sourced elevation data, N lock down points on an imaging grid of a SAR image, where N is an integer greater than one, determining, based on radar pulse data and the N lock down points, a slant range for each of the N lock down points resulting in N slant ranges, interpolating, based on the N slant ranges, slant ranges for pixels of the SAR image resulting in interpolated slant ranges, and back-projecting, based on the interpolated slant ranges and the N slant ranges, the radar pulse data resulting in the SAR image.

In Example 9, Example 8 further includes, wherein the operations further comprise receiving data indicating a size of the SAR image.

In Example 10, Example 9 further includes, wherein the size indicating a number of rows and a number of columns of pixels in the SAR image.

In Example 11, at least one of Examples 8-10 further includes, wherein each of the N lock down points are represented by a three-dimensional (3D) point indicating location and elevation of a surface in a field of view of the SAR image.

In Example 12, Example 11 further includes, wherein the N lock down points include four corner pixels and a centermost pixel of the SAR image.

In Example 13, at least one of Examples 8-12 further includes, wherein the operations further comprise autofocusing the SAR image resulting in a focused SAR image.

In Example 14, at least one of Examples 8-13 further includes, wherein the elevation data is retrieved from elevation source data of a geographic region depicted in the SAR image.

Example 15 includes a system comprising processing circuitry, and a memory including instructions that, when executed by the processing circuitry, cause the processing circuitry to perform operations comprising identifying, based on sourced elevation data, N lock down points on an imaging grid of a synthetic aperture radar (SAR) image, where N is an integer greater than one, determining, based on radar pulse data and the N lock down points, a slant range for each of the N lock down points resulting in N slant ranges, interpolating, based on the N slant ranges, slant ranges for pixels of the SAR image resulting in interpolated slant ranges, and back-projecting, based on the interpolated slant ranges and the N slant ranges, the radar pulse data resulting in the SAR image.

In Example 16, Example 15 further includes, wherein the operations further comprise receiving data indicating a size of the SAR image.

In Example 17, Example 16 further includes, wherein the size indicates a number of rows and a number of columns of pixels in the SAR image.

In Example 18, at least one of Examples 15-17 further includes, wherein each of the N lock down points are represented by a three-dimensional (3D) point indicating location and elevation of a surface in a field of view of the SAR image.

In Example 19, Example 18 further includes, wherein the N lock down points include four corner pixels and a centermost pixel of the SAR image.

In Example 20, at least one of Examples 15-19 further incudes, wherein the operations further comprise autofocusing the SAR image resulting in a focused SAR image.

Although teachings have been described with reference to specific example teachings, it will be evident that various modifications and changes may be made to these teachings without departing from the broader spirit and scope of the teachings. Accordingly, the specification and drawings are to be regarded in an illustrative rather than a restrictive sense. The accompanying drawings that form a part hereof, show by way of illustration, and not of limitation, specific teachings in which the subject matter may be practiced. The teachings illustrated are described in sufficient detail to enable those skilled in the art to practice the teachings disclosed herein. Other teachings may be utilized and derived therefrom, such that structural and logical substitutions and changes may be made without departing from the scope of this disclosure. This Detailed Description, therefore, is not to be taken in a limiting sense, and the scope of various teachings is defined only by the appended claims, along with the full range of equivalents to which such claims are entitled.

Aspects of the present disclosure are set out in the following numbered clauses:

Clause 1. A method comprising: identifying, based on sourced elevation data, N lock down points on an imaging grid of a synthetic aperture radar (SAR) image, where N is an integer greater than one; determining, based on radar pulse data and the N lock down points, a slant range for each of the N lock down points resulting in N slant ranges; interpolating, based on the N slant ranges, slant ranges for pixels on the SAR image resulting in interpolated slant ranges; and back-projecting, based on the interpolated slant ranges and the N slant ranges, the radar pulse data resulting in the SAR image.

Clause 2. The method of clause 1 further comprising receiving data indicating a size of the SAR image.

Clause 3. The method of clause 2, wherein the size indicating a number of rows and a number of columns of pixels in the SAR image.

Clause 4. The method of clause 1, wherein each of the N lock down points are represented by a three-dimensional (3D) point indicating location and elevation of a surface in a field of view of the SAR image.

Clause 5. The method of clause 4, wherein the N lock down points include four corner pixels and a centermost pixel of the SAR image.

Clause 6. The method of clause 1 further comprising autofocusing the SAR image resulting in a focused SAR image.

Clause 7. The method of clause 1, wherein the elevation data is retrieved from elevation source data of a geographic region depicted in the SAR image.

Clause 8. A non-transitory machine-readable medium including instructions that, when executed by a machine, cause the machine to perform operations for improving synthetic aperture radar (SAR) imagery, the operations comprising: identifying, based on sourced elevation data, N lock down points on an imaging grid of a SAR image, where N is an integer greater than one; determining, based on radar pulse data and the N lock down points, a slant range for each of the N lock down points resulting in N slant ranges; interpolating, based on the N slant ranges, slant ranges for pixels of the SAR image resulting in interpolated slant ranges; and back-projecting, based on the interpolated slant ranges and the N slant ranges, the radar pulse data resulting in the SAR image.

Clause 9. The non-transitory machine-readable medium of clause 8, wherein the operations further comprise receiving data indicating a size of the SAR image.

Clause 10. The non-transitory machine-readable medium of clause 9, wherein the size indicating a number of rows and a number of columns of pixels in the SAR image.

Clause 11. The non-transitory machine-readable medium of clause 8, wherein each of the N lock down points are represented by a three-dimensional (3D) point indicating location and elevation of a surface in a field of view of the SAR image.

Clause 12. The non-transitory machine-readable medium of clause **11,** wherein the N lock down points include four corner pixels and a centermost pixel of the SAR image.

Clause 13. The non-transitory machine-readable medium of clause 8, wherein the operations further comprise autofocusing the SAR image resulting in a focused SAR image.

Clause 14. The non-transitory machine-readable medium of clause 8, wherein the elevation data is retrieved from elevation source data of a geographic region depicted in the SAR image.

15. A system comprising: processing circuitry; and a memory including instructions that, when executed by the processing circuitry, cause the processing circuitry to perform operations comprising: identifying, based on sourced elevation data, N lock down points on an imaging grid of a synthetic aperture radar (SAR) image, where N is an integer greater than one; determining, based on radar pulse data and the N lock down points, a slant range for each of the N lock down points resulting in N slant ranges; interpolating, based on the N slant ranges, slant ranges for pixels of the SAR image resulting in interpolated slant ranges; and back-projecting, based on the interpolated slant ranges and the N slant ranges, the radar pulse data resulting in the SAR image.

Clause 16. The system of clause 15, wherein the operations further comprise receiving data indicating a size of the SAR image.

Clause 17. The system of clause 16, wherein the size indicating a number of rows and a number of columns of pixels in the SAR image.

Clause 18. The system of clause 15, wherein each of the N lock down points are represented by a three-dimensional (3D) point indicating location and elevation of a surface in a field of view of the SAR image.

Clause 19. The system of clause 18, wherein the N lock down points include four corner pixels and a centermost pixel of the SAR image.

Clause 20. The system of clause 15, wherein the operations further comprise autofocusing the SAR image resulting in a focused SAR image.

## Claims

1. A method comprising:

   identifying, based on sourced elevation data, N lock down points on an imaging grid of a synthetic aperture radar (SAR) image, where N is an integer greater than one;
   determining, based on radar pulse data and the N lock down points, a slant range for each of the N lock down points resulting in N slant ranges;
   interpolating, based on the N slant ranges, slant ranges for pixels on the SAR image resulting in interpolated slant ranges; and
   back-projecting, based on the interpolated slant ranges and the N slant ranges, the radar pulse data resulting in the SAR image.

2. The method of claim 1 further comprising receiving data indicating a size of the SAR image.

3. The method of claim 2, wherein the size indicating a number of rows and a number of columns of pixels in the SAR image.

4. The method of claim 1, wherein each of the N lock down points are represented by a three-dimensional (3D) point indicating location and elevation of a surface in a field of view of the SAR image; and
   preferably, wherein the N lock down points include four corner pixels and a centermost pixel of the SAR image.

5. The method of claim 1 further comprising autofocusing the SAR image resulting in a focused SAR image.

6. The method of claim 1, wherein the elevation data is retrieved from elevation source data of a geographic region depicted in the SAR image.

7. A non-transitory machine-readable medium including instructions that, when executed by a machine, cause the machine to perform operations for improving synthetic aperture radar (SAR) imagery, the operations comprising:

   identifying, based on sourced elevation data, N lock down points on an imaging grid of a SAR image, where N is an integer greater than one;
   determining, based on radar pulse data and the N lock down points, a slant range for each of the N lock down points resulting in N slant ranges;
   interpolating, based on the N slant ranges, slant ranges for pixels of the SAR image resulting in interpolated slant ranges; and
   back-projecting, based on the interpolated slant ranges and the N slant ranges, the radar pulse data resulting in the SAR image.

8. The non-transitory machine-readable medium of claim 7, wherein the operations further comprise receiving data indicating a size of the SAR image; and
   preferably, wherein the size indicating a number of rows and a number of columns of pixels in the SAR image.

9. The non-transitory machine-readable medium of claim 7, wherein each of the N lock down points are represented by a three-dimensional (3D) point indicating location and elevation of a surface in a field of view of the SAR image; and preferably, wherein the N lock down points include four corner pixels and a centermost pixel of the SAR image.

10. The non-transitory machine-readable medium of claim 7, wherein the operations further comprise autofocusing the SAR image resulting in a focused SAR image.

11. The non-transitory machine-readable medium of claim 7, wherein the elevation data is retrieved from elevation source data of a geographic region depicted in the SAR image.

12. A system comprising:

processing circuitry; and
a memory including instructions that, when executed by the processing circuitry, cause the processing circuitry to perform operations comprising:

identifying, based on sourced elevation data, N lock down points on an imaging grid of a synthetic aperture radar (SAR) image, where N is an integer greater than one;
determining, based on radar pulse data and the N lock down points, a slant range for each of the N lock down points resulting in N slant ranges;
interpolating, based on the N slant ranges, slant ranges for pixels of the SAR image resulting in interpolated slant ranges; and
back-projecting, based on the interpolated slant ranges and the N slant ranges, the radar pulse data resulting in the SAR image.

13. The system of claim 12, wherein the operations further comprise receiving data indicating a size of the SAR image; and preferably, wherein the size indicating a number of rows and a number of columns of pixels in the SAR image.

14. The system of claim 12, wherein each of the N lock down points are represented by a three-dimensional (3D) point indicating location and elevation of a surface in a field of view of the SAR image; and preferably, wherein the N lock down points include four corner pixels and a centermost pixel of the SAR image.

15. The system of claim 12, wherein the operations further comprise autofocusing the SAR image resulting in a focused SAR image.

100

102
104
114
t2
102
104
114
t1
TIME
108
110
112
106
116

*FIG. 1*

FIG. 2

*FIG. 3*

EP 4 700 435 A1

**400**

222

440

346

334

*FIG. 4*

*FIG. 5*

*FIG. 7*

*FIG. 6*

800

880 — IDENTIFY, BASED ON SOURCED ELEVATION DATA, N LOCK DOWN POINTS ON AN IMAGING GRID OF A SYNTHETIC APERTURE RADAR (SAR) IMAGE, WHERE N IS AN INTEGER GREATER THAN ONE

882 — DETERMINE, BASED ON RADAR PULSE DATA AND THE N LOCK DOWN POINTS, A SLANT RANGE FOR EACH OF THE N LOCK DOWN POINTS RESULTING IN N SLANT RANGES

884 — INTERPOLATE, BASED ON THE N SLANT RANGES, SLANT RANGES FOR PIXELS OF THE SAR IMAGE RESULTING IN INTERPOLATED SLANT RANGES

886 — BACK-PROJECT, BASED ON THE INTERPOLATED SLANT RANGES AND THE N SLANT RANGES, THE RADAR PULSE DATA RESULTING IN THE SAR IMAGE

*FIG. 8*

900

*FIG. 9*

Europäisches
Patentamt

European
Patent Office

Office européen
des brevets

# EUROPEAN SEARCH REPORT

**Application Number**

EP 25 18 1742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUIZ-CARREGAL GERARD ET AL: "Single and Repeat-Pass Interferometry Using the Ku-Band SARDrone System", IGARSS 2024 - 2024 IEEE INTERNATIONAL GEOSCIENCE AND REMOTE SENSING SYMPOSIUM, IEEE, 7 July 2024 (2024-07-07), pages 1954-1958, XP034686765, DOI: 10.1109/IGARSS53475.2024.10642178 [retrieved on 2024-09-05] * the whole document * | 1-15 | INV. G01S13/90 |
| A | SHUNJUN WEI ET AL: "Millimeter-Wave Interferometric Synthetic Aperture Radar Imaging via Ground Projection", 2014 IEEE 17TH INTERNATIONAL CONFERENCE ON COMPUTATIONAL SCIENCE AND ENGINEERING, IEEE, 19 December 2014 (2014-12-19), pages 334-339, XP032730277, DOI: 10.1109/CSE.2014.89 [retrieved on 2015-01-26] * the whole document * | 1-15 | |
| A | CHEN QUAN ET AL: "A Fast Cartesian Back-Projection Algorithm Based on Ground Surface Grid for GEO SAR Focusing", IEEE TRANSACTIONS ON GEOSCIENCE AND REMOTE SENSING, IEEE, USA, vol. 60, 15 November 2021 (2021-11-15), pages 1-14, XP011900565, ISSN: 0196-2892, DOI: 10.1109/TGRS.2021.3125797 [retrieved on 2022-02-14] * the whole document * | 1-15 | **TECHNICAL FIELDS SEARCHED (IPC)** G01S |

-/--

The present search report has been drawn up for all claims

| Place of search | Date of completion of the search | Examiner |
|---|---|---|
| Munich | 3 November 2025 | Rudolf, Hans |

page 1 of 2

| | Europäisches Patentamt European Patent Office Office européen des brevets | **EUROPEAN SEARCH REPORT** | **Application Number** EP 25 18 1742 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FREY OTHMAR ET AL: "GPU-based parallelized time-domain back-projection processing for Agile SAR platforms", 2014 IEEE GEOSCIENCE AND REMOTE SENSING SYMPOSIUM, IEEE, 13 July 2014 (2014-07-13), pages 1132-1135, XP032674038, DOI: 10.1109/IGARSS.2014.6946629 [retrieved on 2014-11-04] * the whole document * | 1-15 | |
| A | CN 105 842 694 A (CN ELECT TECH NO 38 RES INST) 10 August 2016 (2016-08-10) * the whole document * | 1-15 | |
| A | GUO ZHENYU ET AL: "Simplified and approximation autofocus back-projection algorithm for SAR", THE JOURNAL OF ENGINEERING, THE INSTITUTION OF ENGINEERING AND TECHNOLOGY, MICHAEL FARADAY HOUSE, SIX HILLS WAY, STEVENAGE, HERTS. SG1 2AY, UK, vol. 2019, no. 20, 1 October 2019 (2019-10-01), pages 6408-6412, XP006086098, DOI: 10.1049/JOE.2019.0406 * the whole document * | 1-15 | TECHNICAL FIELDS SEARCHED (IPC) |
| A | CN 117 368 914 A (UNIV CHONGQING) 9 January 2024 (2024-01-09) * the whole document * | 1-15 | |

The present search report has been drawn up for all claims

| Place of search | Date of completion of the search | Examiner |
|---|---|---|
| Munich | 3 November 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1742

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | Publication date | Patent family member(s) | Publication date |
|---|---|---|---|
| CN 105842694 A | 10-08-2016 | NONE | |
| CN 117368914 A | 09-01-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. I. DUERSCH** ; **D. G. LONG**. Analysis of MIMO pixel correlation in SAR. *IEEE Trans. Geosci. Remote Sens.*